# EUROPÄISCHE PATENTSCHRIFT

(11) **EP 1 515 547 B1**
(45) Veröffentlichungstag und Bekanntmachung des Hinweises auf die Patenterteilung: **02.11.2006**
(21) Anmeldenummer: 04021290.4
(22) Anmeldetag: 08.09.2004
(51) Int. Cl.: H04N 5/235, B60R 1/00, G08G 1/16, G08G 1/04, B60Q 1/52, G06T 7/20, B60Q 1/08

(54) **Optoelektronische Überwachungseinrichtung für Kraftfahrzeuge**
Optoelectronic supervisising device for vehicles
Dispositif de surveillance opto-électronique pour véhicules automobiles

(30) Priorität: 13.09.2003 DE 10342388
(43) Veröffentlichungstag der Anmeldung: 16.03.2005
(73) Patentinhaber: Hella KGaA Hueck & Co., 59552 Lippstadt (DE)
(72) Erfinder: Adameck, Markus, 59555 Lippstadt (DE); Claes, Peter, 59557 Lippstadt (DE); Knaack, Ulrich, 33098 Paderborn (DE)

(56) Entgegenhaltungen:
- EP-A- 0 347 090
- EP-A- 1 308 346
- US-A- 4 382 267
- US-A- 5 262 852
- US-A- 5 835 137
- US-A- 5 837 994
- US-A1- 2003 103 141
- US-B1- 6 343 869

## Beschreibung

Die Erfindung bezieht sich auf eine optoelektronische Überwachungseinrichtung für Kraftfahrzeuge zur Aufnahme von Bildern mit einem Sensorarray bestehend aus einer Vielzahl von einzelne Bildpunkte bildenden photoelektrischen Wandlerelementen, wobei die Wandlerelemente in Abhängigkeit von ihrer jeweiligen Lichtbeaufschlagung ein der Lichtstärke und der elektronisch einstellbaren Integrationszeit entsprechendes elektrisches Signal generieren.

Eine derartige optoelektronische Überwachungseinrichtung für Kraftfahrzeuge ist beispielsweise aus der EP 1 015 287B1 bekannt. Dabei ist eine Vielzahl von Anwendungen solcher optoelektronischen Überwachungseinrichtungen im Fahrzeug möglich. So ist es beispielsweise aus der DE 100 53 315 C2 bekannt, mittels einer in Fahrtrichtung ausgerichteten optoelektronischen Kamera Verkehrszeichen zu detektieren. Eine weitere Anwendung ist beispielsweise aus der EP 1 308 346 A2 bekannt, wo eine Einparkhilfe unter Verwendung von optoelektronischen Kameras beschrieben wird.

Eine gattungsbildende Überwachungseinheit ist aus der US-A-5 262 852 bekannt.

Beim Einsatz optoelektronischer Überwachungseinrichtungen in Kraftfahrzeugen reicht es nicht aus, mit Einzelbildaufnahmen zu arbeiten, sondern es ist vielmehr eine sequentielle Aufnahme von Bildern mit einer hohen Bildwiederholrate erforderlich, um die Änderung der Fahrzeugumgebung aufgrund der Fahrzeugbewegung möglichst zeitnahe zu erfassen. Dies ist insbesondere bei höheren Fahrgeschwindigkeiten, wo es zu einer schnellen Änderung der Fahrzeugumgebung kommt, notwendig.

Darüber hinaus ist eine optoelektronische Überwachungseinrichtung für Kraftfahrzeuge unterschiedlichsten Umgebungslichtverhältnissen (vom Tageslicht bei einem klaren Sommertag über die Dämmerung bis hin zum Abendlicht) ausgesetzt, wobei insbesondere bei einer sehr geringen Umgebungshelligkeit die Aufnahme von Bildern mit einer ausreichenden Qualität problematisch ist.

Es ist daher die Aufgabe der Erfindung, eine optoelektronische Überwachungseinrichtung für Kraftfahrzeuge zu schaffen, die es einerseits gestattet, auch bei einer geringen Umgebungshelligkeit Bildaufnahmen zu machen, und andererseits in der Lage ist, Änderungen der Fahrzeugumgebung zeitnah zu erfassen.

Diese Aufgabe wird erfindungsgemäß dadurch gelöst, dass die Integrationszeit, d.h. die Zeit, in der die durch das auf die Wandlerelemente einfallende Licht erzeugten Ladungsträger gesammelt werden, in Abhängigkeit von der Relativbewegung zwischen dem Kraftfahrzeug und der Umgebung, insbesondere in Abhängigkeit der Fahrgeschwindigkeit, und/oder in Abhängigkeit von der Relativbewegung von Objekten einer Bildfolge eingestellt wird.

Auf diese Weise kann dann insbesondere in Situationen mit einer geringen Fahrgeschwindigkeit, zum Beispiel beim Einparken, wo bereits eine kleine Bildwiederholrate ausreichend ist, die Integrationszeit heraufgesetzt werden, so daß auch bei einer geringen Umgebungshelligkeit eine ausreichende Belichtung des Sensorarrays sichergestellt ist.

Die Bildwiederholrate limitiert die Integrationszeit, da die Integrationszeit nicht länger sein kann als der Kehrwert der Bildwiederholrate, d.h. je höher die Bildwiederholrate, desto geringer ist die maximal mögliche Integrationszeit und umgekehrt.

Mit anderen Worten wird es durch die erfindungsgemäße Überwachungseinrichtung ermöglicht, dass bei hohen Fahrgeschwindigkeiten eine ausreichend hohe Bildwiederholrate sichergestellt ist, während bei einer geringen Umgebungshelligkeit und niedrigen Fahrgeschwindigkeiten, wo eine hohe Bildwiederholrate nicht erforderlich ist, die Integrationszeit zugunsten einer besseren Belichtung heraufgesetzt wird. Mit der erfindungsgemäßen Einrichtung wird sichergestellt, dass es aufgrund der erfindungsgemäß situativ längeren Integrationszeiten zu keinem Informationsverlust durch Unterbelichtung kommt.

Dabei ist nicht erfindungsgemäss die situative Anpassung der Integrationszeiten keineswegs auf die Anpassung an die Fahrgeschwindigkeit beschränkt. Eine Anpassung der Integrationszeiten ist vielmehr auch für den Fall des Fahrzeugstillstands vorgesehen, wobei die Anpassung dann in Abhängigkeit davon erfolgt, ob sich Objekte gegenüber der von der Kamera beobachteten Fahrzeugumgebung - und damit auch relativ zum Kraftfahrzeug - bewegen. Die Detektion dieser Relativbewegung der Objekte wird vorzugsweise über einen in einer Ansteuereinheit implementierten Softwarealgorithmus anhand einer Folge von sequentiell aufgenommenen Bildern durch Vergleich dieser Bilder durchgeführt, wobei dann die Wanderungsgeschwindigkeit einzelner Objekte im Bild anhand der Differenzpositionen ermittelt werden kann. Änderungen von Objektpositionen im Bild werden auch als optischer Fluß bezeichnet. In Situationen, wo die Objekte in der Fahrzeugumgebung nicht oder nur kaum ihre Position ändern, kann dann die Integrationszeit - wie im Fall kleiner Fahrgeschwindigkeiten - zugunsten einer bessern Belichtung heraufgesetzt werden. Falls allerdings die Geschwindigkeit mit der sich die Position eines Objektes von einem Bild zum nächsten stark ändert, wird die Integrationszeit wieder heruntergesetzt, um eine höhere Bildwiederholrate und damit eine zeitnahe Erfassung von Änderungen zu ermöglichen.

Anhand der beigefügten Zeichnungen soll die Erfindung nachfolgend näher erläutert werden. Es zeigt:
- Figur 1: ein Blockschaltbild der erfindungsgemäßen Überwachungseinrichtung,
- Figur 2: eine Steuertabelle mit Wertepaaren (Umgebungshelligkeit und Fahrgeschwindigkeit) und den zugehörigen Bildwiederholraten bzw. Integrationszeiten,

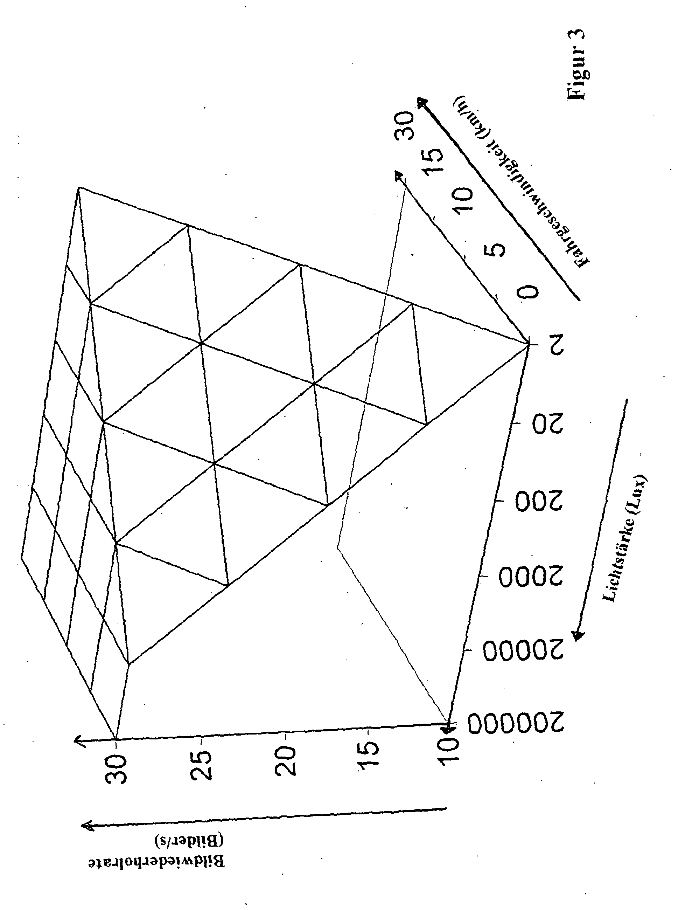

- Figur 3: eine dreidimensionales Diagramm zur Veranschaulichung der Steuertabelle gemäß Figur 2.

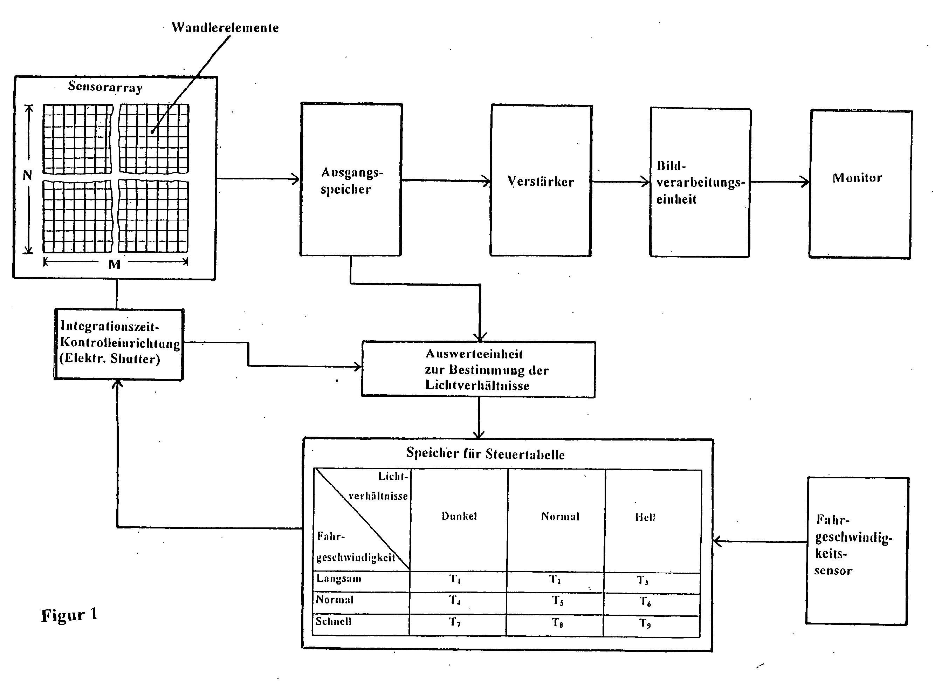

Figur 1 zeigt ein Blockschaltbild der erfindungsgemäßen Überwachungseinrichtung. Sie umfasst ein Sensorarray mit einer Vielzahl von optoelektronischen Wandlerelementen, die matrixförmig in Form von N-Zeilen und M Spalten angeordnet sind. Dabei repräsentiert jedes Wandlerelement einen Bildpunkt (Pixel). Bei dem Sensorarray handelt es sich um ein Halbleiterbauelement, in Form eines CCD-Chips oder eines CMOS-Chips.

Die Integrationszeit der Wandlerelemente wird über eine Integrationszeit-Kontrolleinrichtung, einem sogenannten elektronischen Shutter, eingestellt. Dabei bestimmt die Bildwiederholrate für die Aufnahme der Bilder die maximal mögliche Länge der Integrationszeit. Dabei kann die Belichtung über den elektronischen Shutter zeilenweise erfolgen (rolling shutter), wobei der Wandlungsprozess jeweils für alle Wandlerelemente einer Zeile gleichzeitig gestartet und beendet wird, oder aber die Belichtung erfolgt für sämtliche Wandlerelemente des Sensorarrays gleichzeitig (full frame shutter).

Die Ausgangssignale der Wandlerelemente werden in einem Ausgangspeicher zwischengespeichert bevor sie dann verstärkt und ggf. über eine Bildverarbeitungseinheit als Bild auf einem Monitor ausgegeben werden, um dem Fahrer Bilder von der Fahrzeugumgebung zu liefern. Dabei ist eine Auswerteeinheit vorgesehen, welche aus den Ausgangssignalen der Wandlerelemente die Umgebungshelligkeit bestimmt, um die Integrationszeit für nachfolgende Bilder in Abhängigkeit der Lichtstärke der Umgebung einzustellen. Für diesen Zweck wird von dieser Auswerteeinheit vorzugsweise eine mittlere Bildhelligkeit ermittelt. Darüber hinaus kann für die Beurteilung der Umgebungslichtverhältnisse auch noch die Standardabweichung der Ausgangssignale der einzelnen Wandlerelemente von einem Mittelwert berücksichtigt werden. Dabei wird vorzugsweise nur die mittlere Bildhelligkeit in einem oder mehreren Bereichen des Bildes und den damit verbundenen Wandlerelementen bestimmt. Aus den so ermittelten Umgebungslichtverhältnissen, die beispielsweise durch einen Lichtstärkewert in der Einheit Lux repräsentiert werden können, wird dann in Verbindung mit der aktuellen Fahrgeschwindigkeit eine Integrationszeit für den elektronischen Shutter bestimmt. Die Fahrgeschwindigkeit wird über einen Fahrgeschwindigkeitssensor ermittelt und steht zum Beispiel als Information auf dem Bussystem (z.B. CAN-Bus) des Fahrzeuges zur Verfügung. In dem in Figur 1 dargestellten Ausführungsbeispiel ist ein Speicher für eine Steuertabelle vorgesehen, in der für verschiedene Wertepaare oder Wertebereichspaare aus Umgebungshelligkeit und Fahrgeschwindigkeit jeweils eine Integrationszeit definiert ist.

Alternativ zu dieser Steuertabelle ist es auch vorgesehen, die Integrationszeit in Abhängigkeit von der Lichtstärke und der Fahrgeschwindigkeit anhand eines Software-Algorithmus zu ermitteln, der in einer nicht dargestellten Ansteuereinheit implementiert ist.

Anstatt die Umgebungslichtverhältnisse zur Bestimmung der Integrationszeit über das Sensorarray selbst zu bestimmen, ist es nicht erfindungsgemäss auch möglich, für diesen Zweck einen separaten Lichtmesser (nicht dargestellt) zu verwenden.

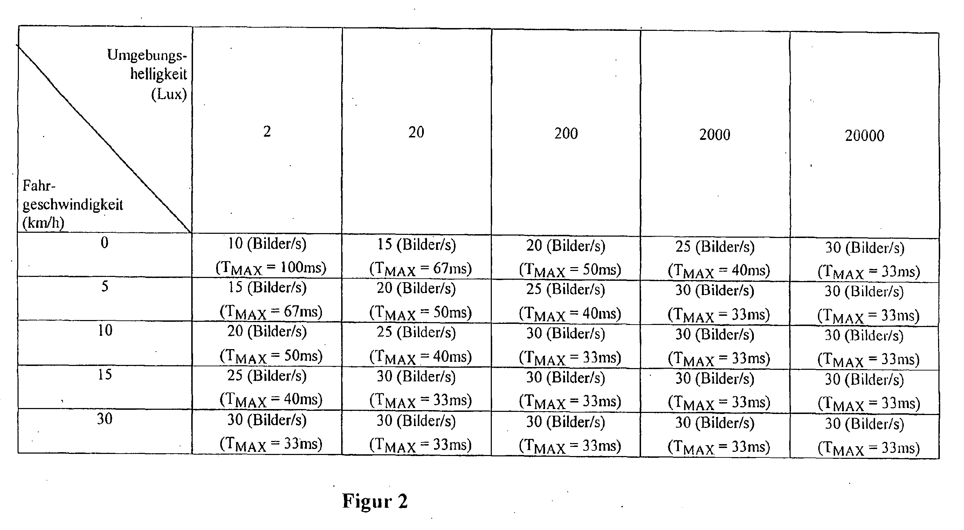

Figur 2 zeigt eine Steuertabelle, in der 5 verschiedene Umgebungshelligkeiten (L) von 2 Lux bis 20.000 Lux und 4 verschiedene Fahrgeschwindigkeiten (v) von 0 bis 30km/h miteinander zur Bestimmung einer lichtstärken- und geschwindigkeitsabhängigen Bildwiederholrate und damit einer maximal möglichen Integrationszeit verknüpft sind. Dabei sind für bestimmte Wertebereichspaare bestimmte Integrationszeiten vorgesehen:
(0 ≤ v < 5km/h) ^ (L < 2 Lux) => T= 100ms
(5km/h ≤ v < 10 km/h) ^ (L ≤ 2 Lux) => T= 67ms
(10km/h ≤ v < 15 km/h) ^ (L ≤ 2 Lux) => T= 50ms
(15km/h < v < 30km/h) ^ (L ≤ 2 Lux) => T= 40ms
(30km/h ≤ v) ^ (L ≤ 2 Lux) => T= 33ms

(0 ≤ v < 5km/h) ^ (2 < L ≤ 20 Lux) => T= 67ms
(5km/h ≤ v < 10 km/h) ^ (2 < L≤ 20 Lux) => T= 50ms
(10km/h ≤ v < 15) ^ (2 < L≤ 20 Lux) => T= 40ms
(15km/h ≤ v) ^ (2 < L≤ 20 Lux) => T= 33ms

(0 ≤ v < 5km/h) ^ (20 < L≤ 200 Lux) => T= 50ms
(5km/h ≤ v < 10 km/h) ^ (20 < L ≤ 200 Lux) => T= 40ms
(10km/h ≤ v) ^ (2 < L ≤ 20 Lux) => T= 33ms

(0 ≤ v < 5km/h) ^ (200 < L ≤ 2000 Lux) => T= 40ms
(5km/h< v) ^ (200 < L ≤ 2000 Lux) => T= 33ms

L > 2000 Lux => T=33ms

Bei Fahrgeschwindigkeiten (v) unterhalb von 5 km/h und einer Umgebungshelligkeit (L) kleiner als 2 Lux wird vorzugsweise mit einer Bildwiederholrate von 10 Bildern pro Sekunde, d.h. mit einer Integrationszeit von 100 Millisekunden gearbeitet.

Beispielsweise ist es vorgesehen, bei einer vergleichsweise geringen Umgebungshelligkeit mit Lichtstärkewerten zwischen 2 und 20 Lux in einer Einparksituation, wo die Fahrgeschwindigkeit typischerweise kleiner als 5km/h ist, mit einer Bildwiederholrate von nur 15 Bildern pro Sekunde, d.h. einer Integrationszeit von 67 Millisekunden, zu arbeiten. Diese Integrationszeit bewirkt dann eine ausreichende Belichtung, welche die Aufnahme von Bildern mit einer guten Qualität, d.h. ohne Informationsverlust, gestattet. Andererseits ist eine vergleichsweise geringe Bildwiederholrate von 15 Bildern pro Sekunde bei Fahrgeschwindigkeiten unterhalb von 5km/h immer noch ausreichend, um die sich aufgrund der Fahrzeugbewegung ändernde Fahrzeugumgebung quasi in Echtzeit abzubilden. Bei höheren Fahrgeschwindigkeiten von (15km/h und größer) wird dann jedoch die Bildwiederholrate zu Lasten der Integrationszeit auf beispielsweise 30 Bilder pro Sekunde oder größer heraufgesetzt, um die sich schneller ändernde Fahrzeugumgebung möglichst zeitnah, d.h. ohne Informationsverlust, abzubilden.

Selbstverständlich ist die Erfindung nicht auf die Werte beschränkt, die in der Steuertabelle angegeben sind. Vielmehr können die Werte je nach Anwendung und Technologie des verwendeten Sensorarrays variieren.

Um bei Verwendung eines Monitors mit einer hohen Bildausgaberate bei kleinen Bildwiederholraten eine Anpassung vornehmen zu können, ist es vorgesehen, ein Bild mehrmals wiederzugeben.

## Patentansprüche

1. Optoelektronische Überwachungseinrichtung für Kraftfahrzeuge zur sequentiellen Aufnahme von Bildern der Kraftfahrzeugumgebung mit einem Sensorarray bestehend aus einer Vielzahl von einzelne Bildpunkte bildenden photoelektrischen Wandlerelementen, wobei die Wandlerelemente in Abhängigkeit von ihrer jeweiligen Lichtbeauschlagung ein der Lichtstärke und der elektronisch einstellbaren Integrationszeit entsprechendes elektrisches Signal generieren, **dadurch gekennzeichnet, dass**
- die Integrationszeit mindestens eines Wandlerelementes in Abhängigkeit von der Relativbewegung zwischen dem Kraftfahrzeug und der Umgebung eingestellt wird,
- wobei die Integrationszeit des mindestens einen Wandlerelementes durch die Bildwiederholrate limitiert ist,
- die Integrationszeit des mindestens einen Wandlerelementes in Abhängigkeit von der Fahrgeschwindigkeit des Kraftfahrzeuges eingestellt wird,
- die Integrationszeit des mindestens einen Wandlerelementes in Abhängigkeit von der Lichtstärke der Umgebungshelligkeit eingestellt wird, und wobei
- das Signal mindestens eines Wandlerelements zur Bestimmung der Lichtstärke verwendet wird, um die Integrationszeit in Abhängigkeit der Lichtstärke der Umgebungshelligkeit einzustellen.

2. Optoelektronische Überwachungsvorrichtung nach Anspruch 1,
**dadurch gekennzeichnet, dass**
zur Bestimmung der Lichtstärke eine vorherbestimmte Anzahl von Wandlerelementen verwendet werden, die sich zueinander in einer definierten Position befinden.

3. Optoelektronische Überwachungseinrichtung nach Anspruch 1 oder 2,
**dadurch gekennzeichnet, dass**
ein elektronischer Speicher vorgesehen ist, in dem eine Steuertabelle abgespeichert ist, in der für verschiedene Wertepaare oder Wertebereichspaare bestehend aus Lichtstärke und Fahrgeschwindigkeit jeweils eine Integrationszeit definiert ist.

4. Optoelektronische Überwachungseinrichtung nach Anspruch 1 oder 2,
**dadurch gekennzeichnet, dass**
in einer Ansteuereinheit ein Soflwarealgorithmus implementiert ist, der die Integrationszeit in Abhängigkeit von der Lichtstärke und der Fahrgeschwindigkeit ermittelt.

5. Optoelektronische Überwachungseinrichtung nach einem der vorstehenden Ansprüche,
**dadurch gekennzeichnet, dass**
die Integrationszeit jeweils für sämtliche Wandlerelemente des Sensorarrays eingestellt wird.

6. Optoelektronische Überwachungseinrichtung nach einem der Ansprüche 1 bis 4,
**dadurch gekennzeichnet, dass**
die Integrationszeit jeweils für eine Zeile oder eine Spalte von Wandlerelementen des Sensorarrays eingestellt wird.

7. Optoelektronische Überwachungseinrichtung nach einem der vorstehenden Ansprüche,
**dadurch gekennzeichnet, dass**
die aufgenommenen Bilder auf einem Monitor dargestellt werden, wobei die Bildausgaberate zur Ausgabe der Bilder auf den Monitor höher ist als die Bildwiederholrate für die Aufnahme der Bilder.

## Claims

1. Optoelectronic monitoring device for motor vehicles for the sequential recording of images of the surroundings of the motor vehicle by means of a sensor array consisting of a plurality of photoelectric converter elements forming individual image points, the converter elements generating an electric signal corresponding to the light intensity and the electronically adjustable integration time as a function of the light applied thereto, **characterised in that** the integration time of at least one converter element is adjusted as a function of the relative movement between the motor vehicle and the surroundings, the integration time of the at least one converter element is limited by the image repetition rate, the integration time of the at least one converter element is adjusted as a function of the driving speed of the motor vehicle, the integration time of the at least one converter element is adjusted as a function of the light intensity of the ambient luminosity and the signal of at least one converter element is used to determine the light intensity in order to adjust the integration time as a function of the light intensity of the ambient luminosity.

2. Optoelectronic monitoring device according to claim 1, **characterised in that** a predetermined number of converter elements situated in a defined position relative to one another are used to determine the light intensity.

3. Optoelectronic monitoring device according to claim 1 or claim 2, **characterised by** an electronic memory in which a control table in which an integration time is defined for different value pairs or value range pairs consisting of light intensity and driving speed is stored.

4. Optoelectronic monitoring device according to claim 1 or claim 2, **characterised in that** a software algorithm which determines the integration time as a function of the light intensity and the driving speed is implemented in a control unit.

5. Optoelectronic monitoring device according to one of the preceding claims, **characterised in that** the integration time of each of the converter elements of the sensor array is adjusted.

6. Optoelectronic monitoring device according to one of claims 1 to 4, **characterised in that** the integration time of a line or a column of converter elements of the sensor array is adjusted.

7. Optoelectronic monitoring device according to one of the preceding claims, **characterised in that** the images recorded are displayed on a monitor, the image display rate for displaying the images on the monitor being higher than the image repetition rate for the recording of the images.

## Revendications

1. Dispositif de surveillance opto-électronique pour véhicule automobile, pour l'enregistrement séquentiel d'images de l'environnement du véhicule avec un réseau de capteurs composé d'une pluralité d'éléments transducteurs photoélectriques formant des points d'image distincts, les éléments transducteurs générant en fonction de leur exposition respective à la lumière un signal électrique correspondant à l'intensité lumineuse et au temps d'intégration électroniquement réglable,
**caractérisé en ce que**
- le temps d'intégration d'un élément transducteur au moins est réglé en fonction du déplacement relatif entre le véhicule automobile et l'environnement,
- le temps d'intégration d'un élément transducteur au moins est limité par la fréquence de rafraîchissement,
- le temps d'intégration d'un élément transducteur au moins est réglé en fonction de la vitesse du véhicule automobile,
- le temps d'intégration d'un élément transducteur au moins est réglé en fonction de l'intensité de la luminosité ambiante, et où
- le signal d'un élément transducteur au moins est exploité pour la détermination d'intensité lumineuse, pour régler le temps d'intégration en fonction de l'intensité de la luminosité ambiante.

2. Dispositif de surveillance opto-électronique selon la revendication 1,
**caractérisé en ce que**
un nombre préalablement fixé d'éléments transducteurs se trouvant dans des positions réciproques définies est exploité pour la détermination d'intensité lumineuse.

3. Dispositif de surveillance opto-électronique selon la revendication 1 ou 2,
**caractérisé en ce que**
une mémoire électronique est prévue, où est archivé un tableau de commande dans lequel sont définis des temps d'intégration respectifs pour différentes paires de valeurs ou paires de plages de valeurs composées de l'intensité lumineuse et de la vitesse.

4. Dispositif de surveillance opto-électronique selon la revendication 1 ou 2,
**caractérisé en ce que**
un algorithme logiciel est implémenté dans une unité de commande, lequel détermine le temps d'intégration en fonction de l'intensité lumineuse et de la vitesse.

5. Dispositif de surveillance opto-électronique selon l'une des revendications précédentes,
**caractérisé en ce que**
le temps d'intégration est réglé pour tous les éléments transducteurs du réseau de capteurs.

6. Dispositif de surveillance opto-électronique selon l'une des revendications 1 à 4,
**caractérisé en ce que**
le temps d'intégration est réglé pour une rangée ou une colonne d'éléments transducteurs du réseau de capteurs.

7. Dispositif de surveillance opto-électronique selon l'une des revendications précédentes,
**caractérisé en ce que**
les images enregistrées sont sorties sur un moniteur, la fréquence de balayage pour la sortie des images sur le moniteur étant supérieure à la fréquence de rafraîchissement pour l'enregistrement des images.
